Europäisches Patentamt

European Patent Office

Office européen des brevets

(19)

(11) Publication number : **0 597 691 A1**

(12) **EUROPEAN PATENT APPLICATION**

(21) Application number : **93308975.7**

(22) Date of filing : **10.11.93**

(51) Int. Cl.$^5$ : **G06F 13/12**

(30) Priority : **12.11.92 US 975037**

(43) Date of publication of application :
**18.05.94 Bulletin 94/20**

(84) Designated Contracting States :
**DE FR GB**

(71) Applicant : **International Business Machines Corporation**
**Old Orchard Road**
**Armonk, N.Y. 10504 (US)**

(72) Inventor : **Chamberlain, Paul Clement**
**10402-A Golden Meadow**
**Austin, Texas 78758 (US)**
Inventor : **Smith, Brian Rutledge**
**2303 Falcon Drive**
**Round Rock, Texas 78681 (US)**

(74) Representative : **Bailey, Geoffrey Alan**
**IBM United Kingdom Limited Intellectual**
**Property Department Hursley Park**
**Winchester Hampshire SO21 2JN (GB)**

(54) **Queuing system and method of operation.**

(57) A queuing system and method of operation are provided that reduces latency and increases efficiency in a general purpose queuing system. The technique of the present invention is applied in an intermediate node that receives an entity, such as information, from a first node, and transfers that entity to a second node. The technique comprises the steps of (a) receiving at the intermediate node (B) a first block of the entity sent by the first node (A) ; (b) upon receipt of the block, initiating the sending of a subsequent block of the entity to the intermediate node ; (c) concurrently with step (b), transferring the first block of the entity to the second node (C) ; (d) upon receipt of an acknowledgement from the second node (C), causing the intermediate node to transfer a portion of the entity to the second node (C), the portion transferred being all of the entity that has at the time of the transferral been received by the intermediate node (B) from the first node (A) since the previous transfer was made ; and (e) repeating steps (b) and (d) until all of the entity has been transferred.

The above technique is adaptive to many environments and will optimize throughput for systems that need to transfer entities such as information. This system and method can handle mismatched flow problems from diverse environments and provides optimal flow for solutions that require guaranteed transfers. This algorithm can change and adapt to varying circumstances. It can be altered in real-time for communication systems. If the block size changes the modification does not alter the smooth flow of the algorithm.

EP 0 597 691 A1

FIG. 4

This invention relates to queuing systems and more particularly to transporting of entities, such as items or information, from one location to another using an intermediate queue.

As computer manufacturers develop faster and more efficient computer communication networks, increasingly there are cases of mismatched bus and communication media speeds. One example is the IBM Microchannel and an IBM Fiber Channel (FCS) Microchannel adapter. The IBM Microchannel is capable of sustaining approximately 50 megabytes/sec, whereas the IBM FCS adapter can support either 25 megabytes/sec or 100 megabytes/sec. This mismatch also occurs with the Microchannel and an IBM Token Ring adapter. Because of these mismatches, data transfers can often be very inefficient with respect to the given communication media speed. They can also be very efficient, but have a long delay in starting transmission. This delay is often referred to as latency. These two problems, latency and efficiency, are classic in the field of communications.

There are numerous applications which require optimization of either latency or throughput. There are also those that require optimization of both. Customers are increasingly interested in low latency and very efficient use of the communication media. The present state of the art fails to provide an adaptive yet simple throughput mechanism between systems when trying to minimize latency and maximize efficiency.

It is therefore an object of the present invention to provide an improved queuing technique for an entity being transferred from a first node to a second node via an intermediate node.

Accordingly the present invention provides a method of operating an intermediate node to receive an entity from a first node and to transfer the entity to a second node, the first and second nodes being connected to the intermediate node by transmission links, the method comprising the steps of:

(a) receiving at the intermediate node a first block of the entity sent by the first node;

(b) upon receipt of the block, initiating the sending of a subsequent block of the entity to the intermediate node;

(c) concurrently with step (b), transferring the first block of the entity to the second node;

(d) upon receipt of an acknowledgement from the second node, causing the intermediate node to transfer a portion of the entity to the second node, the portion transferred being all of the entity that has at the time of the transferral been received by the intermediate node from the first node since the previous transfer was made; and

(e) repeating steps (b) and (d) until all of the entity has been transferred.

Viewed from a second aspect the present invention provides a queuing system in an intermediate node for receiving an entity from a first node and transferring the entity to a second node, the first and second nodes being connected to the intermediate node by transmission links, the system comprising: reception means in the intermediate node for receiving a first block of the entity sent by the first node; initiation means, responsive to the reception means indicating receipt of the block, for initiating the sending of a subsequent block of the entity to the intermediate node; a transfer means, operating concurrently with the initiation means, to transfer the first block of the entity to the second node; the transfer means further, upon receipt by the intermediate node of an acknowledgement from the second node, transferring a portion of the entity to the second node, the portion transferred being all of the entity that has at the time of the transferral been received by the intermediate node from the first node since the previous transfer was made; the initiation means and transfer means repeating their functions until all of the entity has been transferred.

The present invention reduces latency and increases efficiency in a general purpose queuing system. The present invention is adaptive to many environments and will optimize throughput for systems that need to transfer information or other types of entities from point A to point C through intermediate point B. Example environments for utilizing the invention described herein include transfer of data via a communication channel, movement of people/equipment/goods via a transportation system, mail delivery scheduling, telephonic switching, etc.

An intermediate node of a multi-node system controls information flowing through it by queuing received information and transferring the received information to a subsequent node independent of the block size of the information being transferred. Subsequent blocks of information are transferred upon completion of a previous transferred block, rather than upon completion of an incoming block being received.

This procedure can handle mismatched flow problems from diverse environments and provides optimal flow for solutions that require guaranteed transfers. Better performing algorithms exist, but they cannot guarantee that the element being transferred will get from system A to C.

This procedure can change and adapt to varying circumstances. It can be altered in real-time for communication systems. If the block size changes the modification does not alter the smooth flow of the algorithmic procedure. The block size could be changed by a customer desiring to have real-time control over latency and throughput. In the case of IBM's FCS adapter, it may be desirable to expedite certain services and not others. It provides fine-tuned control over the data flowing through the system. When the setup time is very small, one could use a standard communication meter and small block size to get good results. However, if the setup time were sizable, the incurred overhead with a small block size would be very high. The invention disclosed herein is better in both cases, especially the latter.

It can be seen that the present invention provides an adaptive flow control system. In preferred embodiments the technique provides an efficient yet adaptive communication system, being able to match dissimilar path speeds used for transporting information.

The present invention will be described further, by way of example only, with reference to an embodiment thereof as illustrated in the accompanying drawings, in which:

Figure 1 is a block diagram of a system in accordance with the preferred embodiment of the invention, including a sending, intermediate, and receiving node;

Figure 2 is a flow diagram of a simple algorithm used to transfer information between nodes;

Figure 3 is a flow diagram of a standard algorithm used to transfer information between nodes;

Figure 4 is a flow diagram of an adaptive flow algorithm used to transfer information between nodes in accordance with the preferred embodiment of the invention;

Figure 5 is a block diagram of a multi-node environment, such as used in a switched telecommunication system;

Figure 6 is a typical data processing system, which can provide the functionality of a sending and intermediate node; and

Figure 7 is a block diagram of a communications adapter.

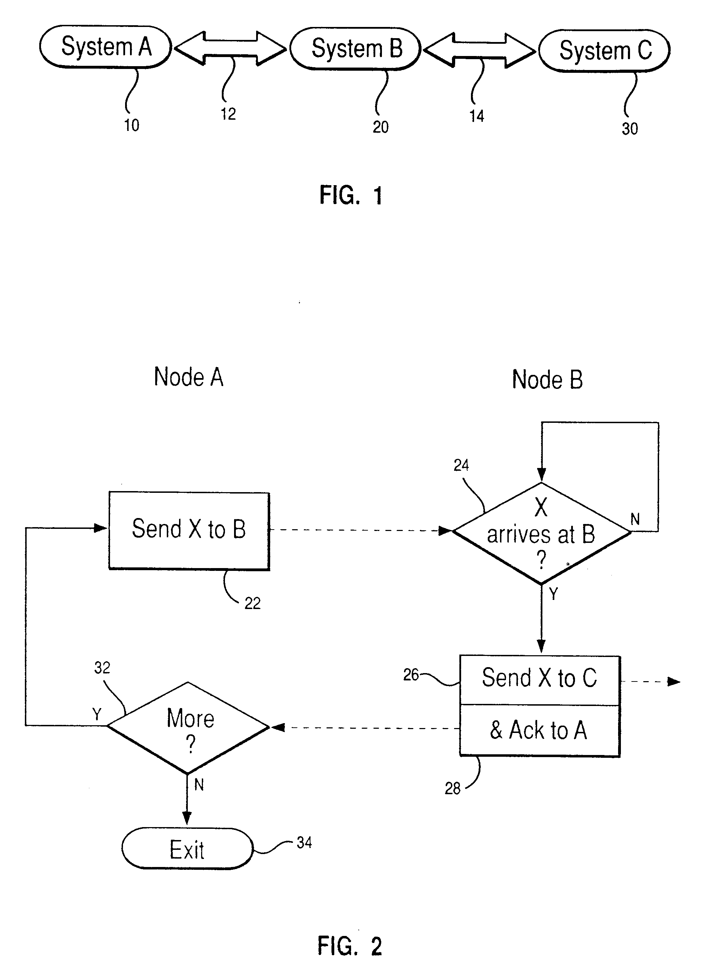

Referring initially to Figure 1, there are several parameters that should be defined before describing the preferred system and method.

- Systems A (10) and B (20) communicate over link AB (12) with link speed M.
- Block moves between A and B are of size $< = x$.
- Systems B (20) and C (30) communicate over link BC (14) with link speed N.
- Block moves between B and C are of any size. Blocks can be any quantity of items/people/information being conveyed or transferred between points.
- There exists a setup time for transfers between B and C of Ts.
- M and N are not necessarily equal.
- Y is the size of data transferred.
- Ttotal is the total time required in the transfer.

## Simple Algorithm

Referring to Figure 2, the simplest technique for transferring data from A (10) to C (30) is to:
- Transfer x from A to B (at 22)
- When x arrives at B (24), transfer x to C (at 26) and send acknowledgement to A (at 28)
- If done (32), exit (34); else go to the beginning (22)
The equation for Ttotal = $Y/M + Y/N + Y*Ts/x$

## Standard Algorithm

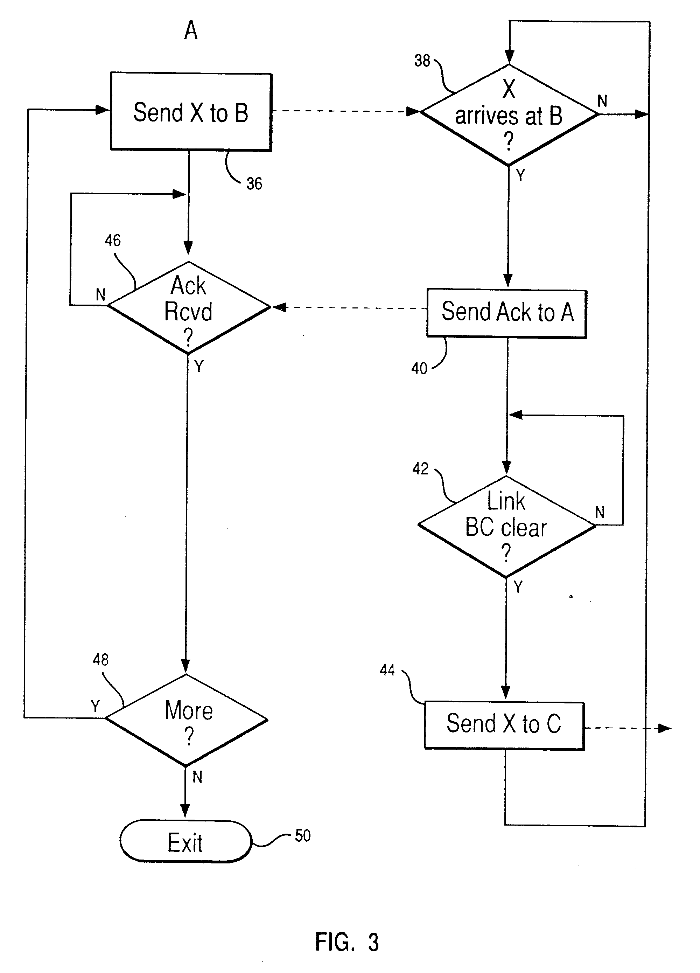

Referring to Figure 3, a technique at the next level of complexity would be:
- Transfer x from A to B (at 36)
- Dual transfer
  - When x arrives at B (38), send acknowledgement to A (40); when link BC clear (42), transfer x to C (44)
  - and, when acknowledgement received from B (46), transfer another x from A to B (36)
- If done(48), exit; else go to the dual transfer (36)
The equation for Ttotal = $x/M + Y/N + Y*Ts/x$

## Adaptive Flow Algorithm

The adaptive algorithm employed in the preferred embodiment of the present invention uses the ratio of M to N, and a value p, where $p = ceil(log(Y/x)/log(M/N))-1$ and ceil() is the ceiling function. sigma-i(n) is the sum from j=0 to j=i of n raised to the jth power.

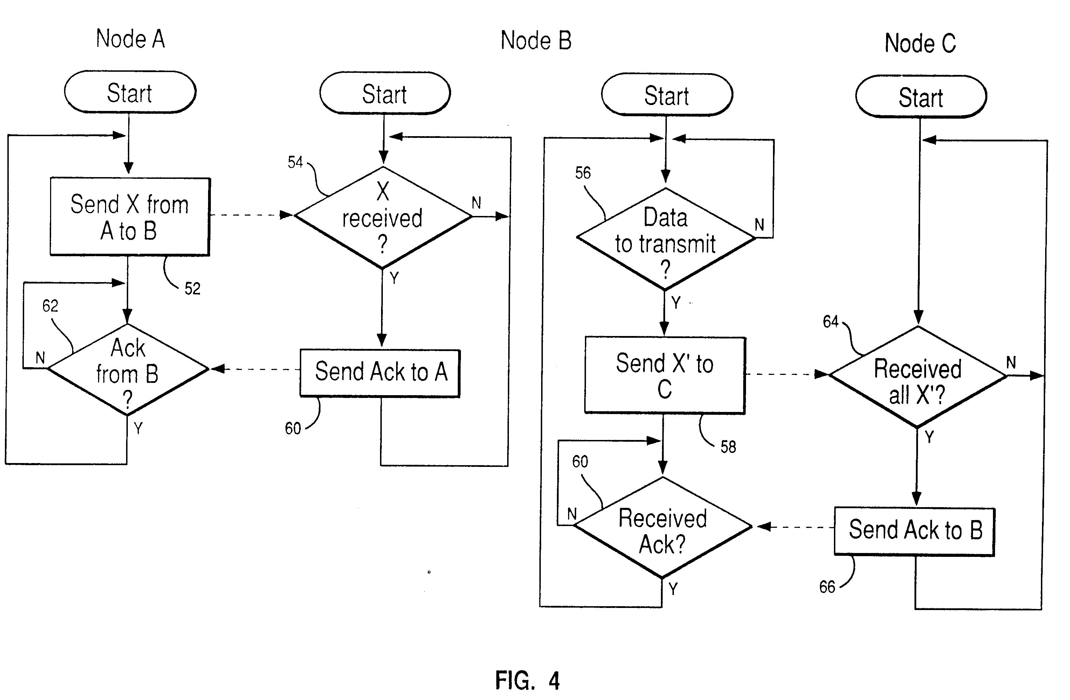

p + 2 is the total number of transfers for the adaptive algorithm. Referring to Figure 4, the adaptive algorithm flows as follows:
- Transfer x from A to B (52)

3

- First dual transfer
  - When x arrives at B (56); transfer x to C (58)
  - When x at B (54), send acknowledgement to A (60) to initiate (62) another transfer of x from A to B (52)
- Second through (p + 2)th dual transfer
  - Upon receipt of an acknowledgment from C (60), whatever is at B (designated by x' as determined at 56; where x' is larger or smaller than x, due to differing link speeds M and N), transfer that to C (58).
  - When x at B (54), send acknowledgement to A (60) to initiate (62) another transfer of x from A to B (52)
- If done, exit; else go do the Ith transfer
- Node C, upon receipt of block x' (64), sends an acknowledgment to B (66). The determination as to whether the block x' has been received is made using any conventional technique known in the communication art for conveying a length of data being sent within the data packet, such as in a packet header file.

The equation for Ttotal using the adaptive algorithm is:

$$Ttotal = x/M + Y/N + ceil(\log(Y/x)/\log(M/N) + 1) * Ts$$

## Formula Derivation

$$
\begin{aligned}
Ttotal = x/M + Ts + x/N & \qquad \text{1st transfer} \\
+ (M/N) * x/N + Ts & \qquad \text{2nd transfer} \\
+ \ldots & \\
+ (M/N)^i * x/N + Ts & \qquad \text{ith transfer} \\
+ \ldots & \\
+ (M/N)^p * x/N + Ts & \qquad \text{p+1st transfer} \\
+ (Y - x * sigma\text{-}p(M/N))/N + Ts & \qquad \text{p+2nd transfer}
\end{aligned}
$$

Solving for Ttotal:

When M/N != 1:

    Ttotal = x/M + (p+2)*Ts + Y/N and

    p = ceil(log(Y/x)/log(M/N)) - 1

When M/N = 1:

    The adaptive flow algorithm reduces to the standard algorithm.

Tables 1-4 demonstrate transfer times for various communication channel scenarios using the above described algorithms. Table 1 shows Ttotal for a 1 Megabyte file transferred using 1K blocks, where the channel speed between A and B is 50 Megabytes/second and the channel speed between B and C is 25 Megabytes/second. This table also shows two set-up time (Ts) examples (10 and 100 microseconds). Not only is the total transfer time less using the adaptive algorithm, but overhead is minimized. The overhead % $\triangleq$ (1 - (Ttotal / min(M,N) / Y)) * 100, where Y is the file size. The overhead ratio $\triangleq$ (overhead %)/(adaptive overhead %).

Table 1. Comparison of Algorithms: 1k blocks, 1M file, M=50MB/s, N=25MB/s

| Algorithm | Ts, us | Total time,s | Overhead, % | Overhead Ratio |
|---|---|---|---|---|
| Simple | 10 | 0.07 | 75% | 230.8 |
| Standard | 10 | 0.05002 | 25% | 77.1 |
| Adaptive | 10 | 0.04013 | 0.33% | 1 |
| Simple | 100 | 0.16 | 300% | 107.1 |
| Standard | 100 | 0.1401 | 250% | 89.4 |
| Adaptive | 100 | 0.04112 | 2.8% | 1 |

Table 2. Comparison of Algorithms: 4k blocks, 1M file, M=50MB/s, N=25MB/s

| Algorithm | Ts, us | Total time,s | Overhead, % | Overhead Ratio |
|---|---|---|---|---|
| Simple | 10 | 0.0625 | 60% | 132.4 |
| Standard | 10 | 0.04258 | 6.5% | 15.2 |
| Adaptive | 10 | 0.04017 | 0.425% | 1 |
| Simple | 100 | 0.085 | 112.5% | 45.9 |
| Standard | 100 | 0.0654 | 63.5% | 25.9 |
| Adaptive | 100 | 0.04098 | 2.45% | 1 |

Table 3. Comparison of Algorithms: 1k blocks, 100M file, M=50MB/s, N=25MB/s

| Algorithm | Ts, us | Total time,s | Overhead, % | Overhead Ratio |
|---|---|---|---|---|
| Simple | 10 | 7.0 | 75% | 15000 |
| Standard | 10 | 5.00002 | 25% | 5000 |
| Adaptive | 10 | 4.0002 | 0.005% | 1 |
| Simple | 100 | 16 | 400% | 6593 |
| Standard | 100 | 14.0001 | 250% | 5495 |
| Adaptive | 100 | 4.00182 | 0.045% | 1 |

Table 4. Comparison of Algorithms: 4k blocks, 100M file, M=50MB/s, N=25MB/s

| Algorithm | Ts, us | Total time,s | Overhead, % | Overhead Ratio |
|---|---|---|---|---|
| Simple | 10 | 6.25 | 60% | 8654 |
| Standard | 10 | 4.25008 | 6.25% | 962 |
| Adaptive | 10 | 4.00026 | 0.0065% | 1 |
| Simple | 100 | 8.5 | 112.5% | 2394 |
| Standard | 100 | 6.5004 | 62.5% | 1330 |
| Adaptive | 100 | 4.00188 | 0.047% | 1 |

Tables 2-4 similarly show various results when using the above described algorithms, for various file and block sizes.

The adaptive algorithm can be implemented using standard programming techniques as follows. One need only count the amount of data that has come from A to B (keep total at system/node B) while the transfer from B to C is occurring. Once the B to C transfer is complete, send the total accounted for data at B (the portion

5

received and counted) on to C. Thus, only node B is concerned with the possibly dissimilar data rates of link AB and link BC. Further, the block size can be dynamically changed at A without disrupting the adaptive algorithm, as the actual block size being used in the transfer of information is not used by B when determining whether to send information to C. This greatly simplifies system design by consolidating the transfer decision at a single node independent of the actual block size being used. The block could be changed to allow greater control over the latency and throughput of a particular flow of information, or to expedite a particular item through the system. The block size would be changed at the sending node, either manually by a user or automatically by the sending node's controller or computer. As the other system node(s) queue and transfer information irrespective of the block size, this size can be dynamically changed by the sender.

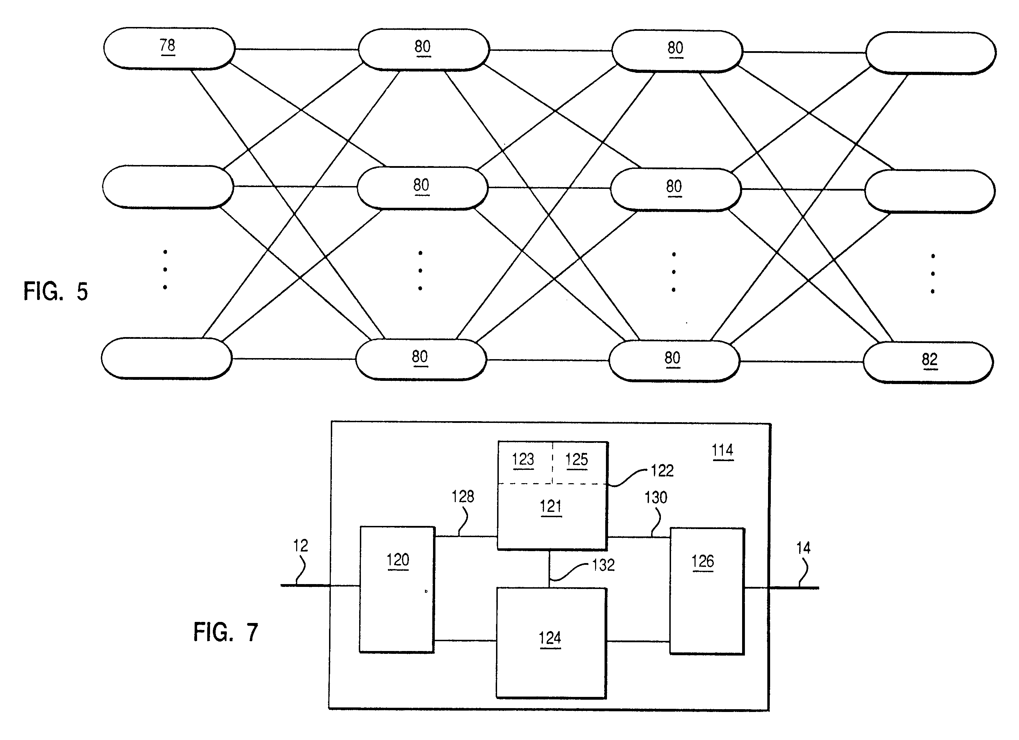

As shown in Figure 5, the technique of the preferred embodiment of this invention could similarly be extended to a system having multiple intermediate nodes 80, such as in a switched point-to-point communication system, with the adaptive algorithm running in each intermediate node (a node other than the originating 78 or final 82 node). Thus, each intermediate node handles the data flow mismatch for its respective sending and receiving nodes.

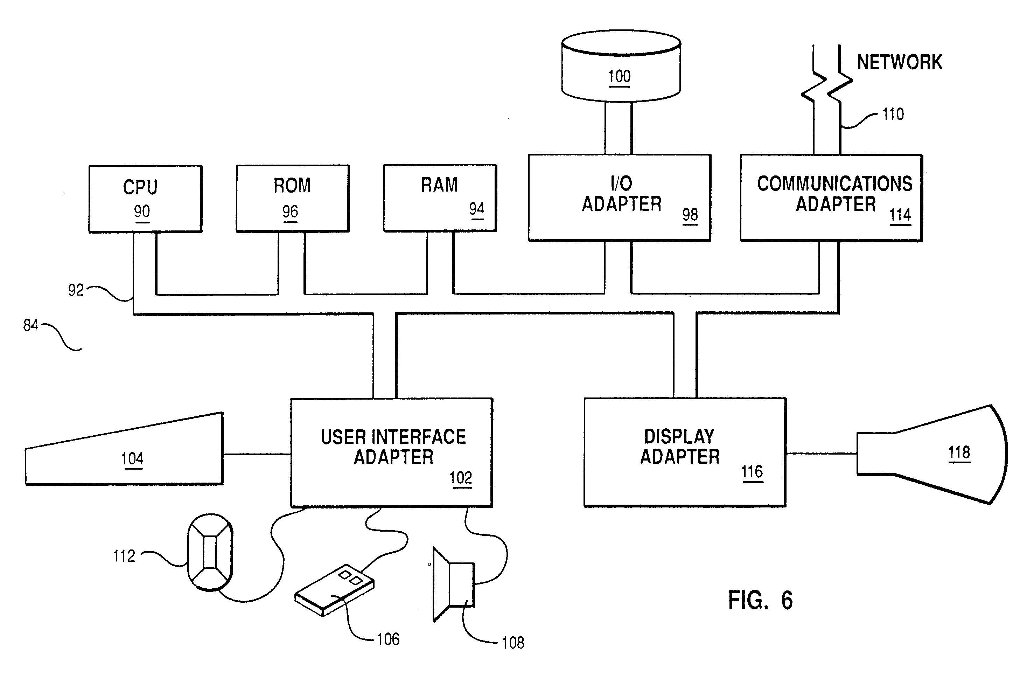

Figure 6 shows the preferred embodiment data processing system 84, which comprises a CPU 90, read only memory 96, random access memory 94, I/O adapter 98, user interface adapter 102, communication adapter 114, and display adapter 116 all interconnected via a common data path, or bus, 92. Each of the above components accesses the common bus using conventional techniques known to those of ordinary skill in the art, and include such methods as dedicating particular address ranges to each component in the system, with the CPU being the bus master. Other conventional techniques known to those of ordinary skill in the art include direct memory access, or DMA, used to transfer data at high speed from external devices such as DASD 100 or network 110 to the data processing system's random access memory (RAM) at 94. As is further shown in Figure 6, these external devices 100 and 110 interface to the common bus 92 through respective adapters 98 and 114. Other external devices such as the display 118 similarly use an adapter 116 to provide data flow between the bus 92 and the display 118. User interface means are provided by adapter 102, which has attached thereto such items as a joystick 112, mouse 106, keyboard 104, and speaker 108. Each of these units is well known as such and so will not be described in detail herein.

Figure 6 corresponds to the logical functions of Figure 1 in the following manner. Link 12 between system A 10 and system B 20 corresponds to bus 92 of Figure 6. System A of Figure 1 is the sender of data, and could be any of CPU 90, RAM 94, or I/O adapter 98 of Figure 6. In the preferred embodiment, data is provided to the communications adapter 114 from RAM 94 using conventional DMA techniques across bus 92. Link 14 of Figure 1 corresponds to network 110 of Figure 6. System C 30 of Figure 1 corresponds to a similar communications adapter 114 in a similar data processing system 84 also residing on network 110. Other embodiments of this invention could similarly use entire data processing systems 84 at each of System A, B, and C of Figure 1, and interconnected using traditional communication techniques.

Figure 7 shows in greater detail the communication adapter 114, which enables the essential features of System B (Figure 1) in the preferred embodiment. The adapter 114 is comprised of a microcontroller 122 coupled to a buffer 124, a transceiver 120 and a transceiver 126. Microcontrollers are commonly known in the art, and comprise a CPU 121, read only memory 123 and random access memory 125. Transceivers are used to interface to bus or network protocols by inserting/extracting the actual data to be transferred, as well as handling status signalling, within the particular bus or network protocol, as is commonly known in the art. The transceiver 120 receives data at 12 from the bus 92 of Figure 6. The transceiver 126 is an optical transceiver, and link 14 is an optical fiber, although it is apparent that the system of the invention could employ any type of transport mechanism. When data arrives at transceiver 120, it is buffered at 124, and the CPU is notified at 128. The CPU 122 maintains a count of the number of bytes received across link 12. The CPU 122, upon receipt of an acknowledgment at 130 which arrived across link 14 from System C (Figure 1), can initiate at 132 a transmittal of buffered information 124 across link 14 using transceiver 126.

The adaptive flow algorithm can be generalized to solve problems outside of the communications environment. It can handle parts inventory/shipping problems, military troop movement, mail delivery scheduling, and many other real world mismatched flow problems. In each case, the user defines the given parameter x to yield an acceptable latency at the beginning, and then follows the algorithm to determine total flow time. The simple and standard algorithms each are $O(n)$ overhead algorithms, whereas the adaptive flow algorithm is $O(\log(n))$. Therefore, as n grows, the adaptive flow algorithm overhead time will grow as $\log(n)$ and the others will grown as n. For large n, the first two algorithms require considerable processing and overhead compared to the adaptive flow algorithm.

## Claims

1. A method of operating an intermediate node (B) to receive an entity from a first node (A) and to transfer the entity to a second node (C), the first and second nodes being connected to the intermediate node by transmission links, the method comprising the steps of:

   (a) receiving at the intermediate node (B) a first block of the entity sent by the first node (A);

   (b) upon receipt of the block, initiating the sending of a subsequent block of the entity to the intermediate node;

   (c) concurrently with step (b), transferring the first block of the entity to the second node (C);

   (d) upon receipt of an acknowledgement from the second node (C), causing the intermediate node to transfer a portion of the entity to the second node (C), the portion transferred being all of the entity that has at the time of the transferral been received by the intermediate node (B) from the first node (A) since the previous transfer was made; and

   (e) repeating steps (b) and (d) until all of the entity has been transferred.

2. A method as claimed in Claim 1, wherein the entity is information.

3. A method as claimed in Claim 2 wherein said information is of total length Y and comprises a plurality of blocks having a block length "x".

4. A method as claimed in Claim 3 wherein the block length "x" comprises a plurality of data bytes, and a count of the data bytes received at the intermediate node (B) is maintained in order to determine the length of the portion to be transferred at step (d).

5. A method as claimed in any preceding claim wherein the transmission link between the first (A) and intermediate (B) nodes operates at a different data rate to the transmission link between the intermediate (B) and second (C) nodes.

6. A method as claimed in Claim 5, wherein the portion transferred at step (d) has a length different to the block length of the blocks sent by the first node (A).

7. A method as claimed in any preceding claims wherein the initiating step (b) is carried out by sending an acknowledgement of receipt of each block to the first node (A).

8. A queuing system in an intermediate node (B) for receiving an entity from a first node (A) and transferring the entity to a second node (C), the first and second nodes being connected to the intermediate node by transmission links, the system comprising:

   reception means in the intermediate node (B) for receiving a first block of the entity sent by the first node (A);

   initiation means, responsive to the reception means indicating receipt of the block, for initiating the sending of a subsequent block of the entity to the intermediate node;

   a transfer means, operating concurrently with the initiation means, to transfer the first block of the entity to the second node (C);

   the transfer means further, upon receipt by the intermediate node (B) of an acknowledgement from the second node (C), transferring a portion of the entity to the second node (C), the portion transferred being all of the entity that has at the time of the transferral been received by the intermediate node (B) from the first node (A) since the previous transfer was made;

   the initiation means and transfer means repeating their functions until all of the entity has been transferred.

9. A system as claimed in Claim 8, wherein the entity is information.

10. A system as claimed in Claim 9 wherein said information is of total length Y and comprises a plurality of blocks having a block length "x".

11. A system as claimed in Claim 10 wherein the block length "x" comprises a plurality of data bytes, and a count of the data bytes received at the intermediate node (B) is maintained in order to determine the length of the portion to be transferred by the transfer means.

12. A system as claimed in any of claims 8 to 11, wherein the transmission link between the first (A) and intermediate (B) nodes operates at a different data rate to the transmission link between the intermediate (B) and second (C) nodes, and the portion transferred by the transfer means has a length different to the block length of the blocks sent by the first node (A).

13. A system as claimed in any of claims 8 to 12, wherein the initiation means initiates the sending of the subsequent block by sending an acknowledgement of receipt of each block to the first node (A).

**FIG. 1**

**FIG. 2**

A

Send X to B — 36

46 — Ack Rcvd ? → N / Y

48 — More ? Y / N

Exit — 50

38 — X arrives at B ? N / Y

Send Ack to A — 40

42 — Link BC clear ? N / Y

Send X to C — 44

FIG. 3

FIG. 4

FIG. 5

78

80 80 80

80 80 80

80 80 82

FIG. 7

114

123 125

121

120

124

126

128 130 132 122

12 14

FIG. 6

EP 0 597 691 A1

**European Patent Office**

# EUROPEAN SEARCH REPORT

Application Number

EP 93 30 8975

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | WO-A-84 03192 (AMERICAN TELEPHONE AND TELEGRAPH COMPANY) * page 32, line 8 - page 43, line 14 * * figures 1,6 * | 1,2,8,9 | G06F13/12 |
| A | COMPUTER COMMUNICATIONS REVIEW, vol.21, no.4, September 1991, NEW YORK US pages 307 - 315 B. S. DAVIE 'A host-network interface architecture for ATM' * the whole document * | 1,2,8,9 | |

**TECHNICAL FIELDS SEARCHED (Int.Cl.5)**

G06F
H04L

The present search report has been drawn up for all claims

| Place of search | Date of completion of the search | Examiner |
|---|---|---|
| BERLIN | 3 March 1994 | Masche, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14